# EUROPÄISCHE PATENTSCHRIFT

(11) **EP 1 130 955 B1**
(45) Veröffentlichungstag und Bekanntmachung des Hinweises auf die Patenterteilung: **02.03.2005**
(21) Anmeldenummer: 99962140.2
(22) Anmeldetag: 11.11.1999
(51) Int. Cl.: A01G 5/04

(54) **PFLANZENARRANGEMENT MIT HALTER FÜR GEGENSTÄNDE DARIN**
PLANT ARRANGEMENT WITH A HOLDER FOR OBJECTS THEREIN
ARRANGEMENT POUR PLANTES COMPORTANT UN SUPPORT D'OBJETS

(30) Priorität: 19.11.1998 DE 29820717 U; 21.07.1999 DE 29912749 U
(43) Veröffentlichungstag der Anmeldung: 12.09.2001
(73) Patentinhaber: Neuner, Andreas, 83646 Bad Tölz (DE)
(72) Erfinder: Neuner, Andreas, 83646 Bad Tölz (DE)
(74) Vertreter: Szynka, Dirk
(86) Internationale Anmeldenummer: PCT/EP1999/008653
(87) Internationale Veröffentlichungsnummer: WO 2000/030429

(56) Entgegenhaltungen:
- WO-A-94/03669
- DE-C- 19 520 654
- FR-A- 2 686 396
- US-A- 1 892 393
- US-A- 1 893 970
- US-A- 4 011 677
- US-A- 4 224 763

## Beschreibung

Diese Erfindung bezieht sich auf den Aufbau eines Blumenstraußes, insbesondere eines Blumenstraußes.

Arrangements und Sträuße aus Blumen und anderen Pflanzen sind beliebte und weit verbreitete Dekorationen. Sie werden im Handel fertig angeboten, von Floristen zusammengestellt oder auch im Privathaushalt aus eigenen Gartenblumen oder dergleichen aufgebaut. Häufig werden solche Arrangements und Sträuße als Geschenke überreicht.

Das Dokument US 1 892 393 zeigt ein Drahtgestell mit einer Mehrzahl Drähte, die an einer gemeinsamen Basis gehalten sind und an ihren jeweils entgegengesetzten Enden einen Ring aufweisen. Durch die Ringe werden Blumen hindurch gesteckt und im Übrigen lose gehalten.

Das Dokument US 4 224 763 zeigt eine Vase mit einem separaten Ring. Der Ring wird über die Stengel einer Mehrzahl von Blumen geschoben und hält diese an einer erhöhten Stelle zusammen. Die Stengel werden an ihren unteren Enden in die Vase gestellt und etwas auseinander geschoben, so dass der Blumenstrauß aus der Eigenstabilität der Stengel heraus und durch den Ring zusammengehalten stehen bleibt.

In der US 1 893 970 geht es um ein Drahtgestell zum Halten einzelner Blumen. Dazu weisen die einzelnen Drahtstangen V-förmige Biegungen auf, in die die Blumenstengel eingeklemmt werden können.

Der vorliegenden Erfindung liegt das technische Problem zugrunde, verbesserte Möglichkeiten zum Aufbau eines Blumenstraußes zu schaffen.

Erfindungsgemäß ist dazu ein Blumenstrauß vorgesehen, der versehen ist mit einem in den Blumenstrauß integrierten Halter für Gegenstände, der eine Mehrzahl verbiegbare Haltestäbe aufweist, die an einem Ende kreisförmig gebündelt an einer gemeinsamen Halterbasis festgehalten sind, und mit zumindest einem an einem der Haltestäbe befestigten und durch den Halter in dem Blumenstrauß gehaltenen Gegenstand, dadurch gekennzeichnet, dass der Gegenstand ein nicht-floraler Gegenstand ist und der Halter in dem Blumenstrauß gefasst und mit ihm eingebunden ist.

Zur Erfindung gehört ferner ein Verfahren zum Aufbau eines solchen Blumenstraußes mit darin integriertem nicht-floralen Gegenstand, bei dem der Gegenstand an einem eine Mehrzahl verbiegbare Haltestäbe, die an einem Ende kreisförmig gebündelt an einer gemeinsamen Halterbasis gehalten sind, aufweisenden Halter befestigt wird und der Blumenstrauß um den Halter herum aufgebaut wird und der Halter in dem Blumenstrauß gehalten und mit ihm eingebunden wird.

Schließlich bezieht sich die Erfindung auf einen zugehörigen Halter für nicht-florale Gegenstände in einem solchen Blumenstrauß mit einem Bündel aus an einem Ende an einer gemeinsamen Halterbasis kreisförmig gebündelt fest miteinander verbundenen verbiegbaren Haltestäben zur Befestigung der Gegenstände in dem Blumenstrauß und zum Einbinden der Halterbasis in den Blumenstrauß.

Die Erfindung bezieht sich somit sowohl auf Erzeugnisse als auch auf ein Verfahren. Die folgende Beschreibung, einschließlich der Ausführungsbeispiele ist daher, auch wenn nicht ausdrücklich betont, als implizierte Offenbarung beider Kategorien zu verstehen.

Die Erfindung richtet sich dabei allgemein auf dekorative Blumensträuße verschiedenster Art.

Die Grundidee der Erfindung besteht darin, dass Blumensträuße viel abwechslungsreicher aufgebaut werden können und noch breitere und günstigere Einsatzmöglichkeiten finden, wenn sich darin auch andere Gegenstände als Blumen in technisch günstiger Weise befestigen lassen. Mit dem Begriff "Gegenstände" sind dabei im folgenden die verschiedensten nicht-floralen Gegenstände umfaßt, die sich sinnvoll in einem Blumenstrauß arrangieren und befestigen lassen, insbesondere Präsentartikel, wie beispielsweise Süßwaren, kleine Marmeladen- oder Kaffeeportionen oder andere kleine Lebensmittelpackungen, kleine Getränkeflaschen, z.B. kleine Flaschen mit hochprozentigen Alkoholika oder Sektflaschen in Piccoloformat, kleineres Kinderspielzeug und typische Babyartikel, wie Schnuller und dergleichen mehr. In Frage kommen alle Gegenstände, die aus dekorativen Gründen attraktiv sind - oder weil sie als Symbolträger oder Geschenkartikel in einem Geschenkstrauß gewünscht sind.

So lässt sich beispielsweise eine kleinere und damit auch kostengünstigere Variante zum klassischen Präsentekorb in Blumenstraußform arrangieren, die ästhetisch anspruchsvoller und auch handlicher und besser transportabel ist als ein Präsentkorb. Häufig sind solche Präsentkörbe eher symbolisch motiviert und werden allein aus optischen Gründen, um das vorhandene Korbvolumen attraktiv auszufüllen, mit im Grunde unnötig umfangreichen Lebensmittelpräsenten bepackt.

Auch läßt sich der klassische Blumenstrauß als höfliches Mitbringsel bei einer gesellschaftlichen Einladung, einfallsreicher und individueller gestalten, indem kleine "nichtflorale" Aufmerksamkeiten mit integriert sind. Das hat auch den Reiz, daß diese kleinen Präsente den eigentlichen Blumenstrauß überdauern und somit, da bei gesellschaftlichen Ereignissen durch die Zahl der Gäste bedingt häufig viel zu viele Blumen geschenkt werden, als Geschenk in besonders guter Erinnerung bleiben.

Auch können die nicht floralen Präsentgegenstände in Papierform vorliegen, beispielsweise als zusammengerolltes Glückwunschschreiben oder Gedicht, als Geldschein, der in einem Blumenstrauß viel besser wirkt als in einem Briefumschlag, usw.

Schließlich lassen sich Sträuße thematisch gestalten, z. B. mit Spielzeug und Süßigkeiten als Mitbringsel für Kinder, wobei der Strauß dabei weniger prosaisch wirkt als ein übliches Kindergeschenk. Auch könnte beispielsweise ein Strauß zu einer Hochzeit mit Schnullern dekoriert werden und dergleichen mehr.

Eine andere Anwendungsmöglichkeit außerhalb des Bereichs der Präsente liegt in der Produktpräsentation. So können Produkte bis zu einer bestimmten Größe, die in einer Auslage präsentiert und zum Kauf angeboten werden sollen oder von einem Handelsvertreter vorgestellt werden, als Gegenstände attraktiv in einem Pflanzenarrangement oder Blumenstrauß arrangiert werden. Vor allem können damit in ihrer ursprünglichen Eigenart wenig dekorative und originelle Produkte durch diese ungewöhliche Präsentation einen höheren Aufmerksamkeitswert erhalten und sich so aus der großen Zahl der Angebote herausheben. So ist es vorstellbar, daß beispielsweise Vertreter für pharmazeutische Produkte bei einem Besuch in einem Krankenhaus oder in einer Arztpraxis als Aufmerksamkeit und Werbepräsent einen mit den Probepackungen der angebotenen Pharmazeutika erfindungsgemäß dekorierten Blumenstrauß überreichen. Ähnliche Möglichkeiten gelten natürlich auch für vielerlei andere Branchen und Produkte und beziehen sich insbesondere auch auf die Schaufensterdekoration.

Um diese Gegenstände, die häufig deutlich schwerer sind als Blumen oder Pflanzenteile, dekorativ und sicher in dem Strauß befestigen und positionieren zu können, ist erfindungsgemäß ein spezieller Halter vorgesehen, der eine Mehrzahl Haltestäbe aufweist. Die Haltestäbe sind an einer gemeinsamen Halterbasis miteinander verbunden und dienen zur Befestigung von Gegenständen an einer von der Halterbasis entfernten Stelle.

Dadurch, daß die Gegenstände somit nicht an den Pflanzenteilen und Blumen selbst befestigt werden müssen, sondern durch einen einzelnen Halter, um den herum der Blumenstrauß aufgebaut ist, sicher gehalten sind, lassen sie sich zum einen bei größerem Gewicht überhaupt sicher positionieren und transportieren und können zum anderen sehr viel besser an bestimmten dekorativen Stellen des Straußes befestigt werden. Auch wenn der Strauß welk und damit instabil wird, behält die Anordnung der Gegenstände ihre Stabilität und ihr optisches Erscheinungsbild.

Ein Vorteil des erfindungsgemäßen Halters gegenüber einer Befestigung von Gegenständen mit einzelnen zurechtgebogenen Drähten liegt daran, daß durch geschickte Anordnung mehrerer Gegenstände in dem Halter insgesamt eine ausgeglichene Gewichtsverteilung geschaffen werden kann. Ebenfalls ist es möglich, bei der Befestigung schwerer einzelner Gegenstände in dem Blumenstrauß durch Anordnung anderer Gegenstände auf der anderen Seite des Straußes zumindest ein gewisses Gegengewicht zu schaffen.

Von Vorteil ist es weiterhin, daß die Haltestäbe des Halters drehfest miteinander verbunden sind, weil sich dann der einzelne Haltestab unter dem Gewicht des an ihm befestigten Gegenstandes sich nicht so verdrehen kann, daß der Gegenstand in die tiefste durch eine Drehung des Haltestabes erreichbare Position rutscht.

Dabei ist der Halter so ausgestaltet, daß die Haltestäbe verbiegbar, und zwar vorzugsweise plastisch verbiegbar sind. Damit kann der einzelne Haltestab und somit auch der gesamte Halter im individuellen Fall auf die Gestaltungswünsche und auch auf die Abmessungen des zu befestigenden Gegenstandes angepaßt werden. Dazu können die Haltestäbe beispielsweise aus Draht, kunststoffummanteltem Draht oder ähnlichem bestehen. Bevorzugte Materialien für die Haltestäbe sind blanker, lackierter oder anderweitig veredelter, z.B. verkupferter Stahldraht. Blanker Stahldraht ist sehr kostengünstig und von hoher Festigkeit. Durch die Veredelung läßt sich vermeiden, daß beispielsweise Blumenwasser mit der Zeit eine leichte Rostfarbe erhält, was jedoch nicht besonders nachteilig ist. Reine Kupferdrähte sind ungünstig, weil sie einerseits zu weich und andererseits zu teuer sind. Gebläuter Stahl führt erfahrungsgemäß zu Unverträglichkeitserscheinungen bei Pflanzen, insbesondere Blumen. Das gilt auch für verzinkten Stahl. Im Gegensatz zu kupferummanteltem Stahldraht hat blanker Stahldraht auch den in der heutigen Zeit nicht unwesentlichen Vorteil der Sortenreinheit und damit günstigen Recycling-Eigenschaften. Stahl ist im übrigen ungiftig für die Umwelt und ein weniger energieaufwendiger Rohstoff als beispielsweise Aluminium.

Nach einem besonderen Aspekt der Erfindung wird die Befestigung des Gegenstandes an dem Haltestab durch einen besonderen Montagekörper erleichtert, der einerseits durch seine Ausdehnung oder Form eine bessere Montierbarkeit für den Gegenstand bietet und andererseits eine Steckverbindungsmöglichkeit für den Haltestab aufweist. Besonders praktisch ist es, wenn der Haltestab in zumindest zwei verschiedenen Richtungen in den Montagekörper einsteckbar ist, so daß der Montagekörper in geometrisch verschiedener Weise montiert werden kann.

Eine praktische Variante sieht eine Klebefläche des Montagekörpers vor, an der der Gegenstand einfach angeklebt wird. Die Klebeverbindung ist ausreichend dauerhaft und läßt sich mit den verschiedensten Gegenständen ohne weiteren Aufwand und geometrisch flexibel vom Floristen, der Hausfrau oder anderen Personen vornehmen, für die der Umgang mit der erfindungsgemäßen Halterung von Gegenständen in dem Blumenstrauß möglichst einfach sein sollte. Dazu kann die Klebefläche selbstklebend beschichtet sein oder auch zur Befestigung des Gegenstandes mit einer doppelseitigen Klebefolie oder einem Klebekissen dienen.

Ein bevorzugtes Material für den Montagekörper ist Polyethylen, das sich einerseits beispielsweise als Spritzgußartikel bei sehr niedrigem Kostenaufwand in praktischen Formen herstellen läßt, andererseits wiederum gute Recycling-Eigenschaften zeigt.

Wenn der verwendete Kunststoff, etwa geeignetes Polyethylen, relativ weich ist, ergibt sich zudem der Vorteil einer Biegsamkeit des Montagekörpers, insbesondere der Klebefläche. Damit kann die Klebefläche auch an nicht ganz ebene Gegenstände angeformt werden. Neben Polyethylen kommen diesbezüglich auch andere weiche Kunststoffe einschließlich verschiedener Gummisorten in Betracht. Wenn der Montagekörper, was an sich auch möglich ist, aus Holz, Metall oder dergleichen besteht, fällt dieser Vorteil der Formflexibilität weg.

In der Form vor dem Zurechtbiegen weist der Halter ein Bündel Stäbe auf, die eine langgestreckte Form haben und vorzugsweise im wesentlichen benachbart zueinander verlaufen, insbesondere ein dichtes Bündel sich der Länge nach berührender Stäbe bilden. Die Stäbe sind dabei an einem Ende direkt miteinander verbunden. Beispielsweise kann ein solcher Halter an einem Ende des Bündels durch eine über das Bündel geschobene Hülse zusammengehalten sein. Eine besonders einfache und wirkungsvolle Form der Verbindung der Stäbe untereinander ist ein Verpressen der Hülse mit dem Stabbündel. Alternativen zum Verpressen sind u.a. Verlöten, Verkleben, Verschweißen, Verdrehen, Eingießen, und zwar mit oder ohne Hülse. Andererseits kann der erfindungsgemäße Halter durchaus auch einstückig aufgebaut sein. Der in den Ansprüchen verwendete Begriff der "festen Verbindung" der Stäbe schließt diesen Fall der einstückigen Ausbildung natürlich mit ein.

Eine günstige Geometrie für ein dichtes Bündel sich berührender Stäbe, die beispielsweise in einer runden Hülse zusammengehalten werden sollen, ist eine im Schnitt sechszählig-symmetrische Anordnung von Stäben, die wiederum einen runden oder sechseckigen Querschnitt aufweisen. Damit wird sozusagen eine "hexagonal dichte Packung" realisiert, beispielsweise mit einem mittigen Stab und sechs symmetrisch um den mittigen Stab herum angeordneten Stäben oder auch mit sechs weiteren zwischen jeweils zwei äußeren Stäben angeordneten Stäben, also insgesamt dreizehn, oder auch mit insgesamt neunzehn Stäben. Im allgemeinen ist jedoch ein Halter mit sieben Stäben völlig ausreichend, weil nur in wenigen Fällen Bedarf an der Befestigung von mehr als sieben Gegenständen bestehen wird. Es kann natürlich in Einzelfällen auch nützlich sein, zwei oder mehr Stäbe zur besonders stabilen Befestigung eines einzigen Gegenstandes zu verwenden.

Natürlich kann es bei einem erfindungsgemäßen Pflanzenarrangement und Verfahren zu dessen Herstellung auch sinnvoll sein, mit zwei oder mehreren erfindungsgemäßen Haltern in einem Arrangement bzw. Blumenstrauß zu arbeiten.

Ferner kann bei einem solchen Stabbündel ein das Stabbündel umfassender verschiebbarer Ring vorgesehen sein, der dazu dient, bei einer bestimmten Position entlang der Längsrichtung des Bündels ein definiertes Herausbiegen einzelner Stäbe aus dem Bündel zu erleichtern und das Bündel nach dem Zurechtbiegen schließlich auf der untersten Position, bei der ein Stab aus dem Bündel herausgebogen ist, zusätzlich zusammen zu hatten. Es kann sich bei dem Ring beispielsweise um ein hohles Stück des selben Typs handeln, aus dem die beschriebene Hülse gefertigt ist. Für das Rohr kommt wiederum bevorzugt blanker Stahl oder verkupferter Stahl in Betracht. Um die Verschiebbarkeit des Rings etwas zu erschweren und damit seinen Sitz zu sichern, kann er auch aus einem Kunststoff bestehen oder mit Kunststoff oder Lack beschichtet sein.

Beim Biegen des Halters, beim Aufbau des Blumenstraußes in und um den Halter und beim Befestigen der Gegenstände an den Haltestäben kann erfindungsgemäß ein Standfuß für den Halter verwendet werden, der beispielsweise die das Bündel zusammenhaltende Hülse nach Einstecken in eine passende Öffnung hält. Der Standfuß kann den Halter und den Blumenstrauß durch seine Grundfläche und sein Eigengewicht halten oder auch mit Schrauben oder einer Klemme zur Befestigung an einer Tischkante oder dergleichen versehen sein. Vorzugsweise ist dieser Standfuß kein mit jedem Halter mitgeliefertes Teil, sondern wird beispielsweise vom Floristen einmal gekauft und auf Dauer für eine große Zahl von Sträußen verwendet.

### Zusammenfassend läßt sich die Erfindung also auch folgendermaßen darstellen:

Es handelt sich um ein Gestänge zum einbinden in Blumensträuße oder Ähnliches, als Halterung für leichte bis mittelschwere Gegenstände, wie z.B. Geschenkartikel, die an dem Gestänge befestigt werden, wobei das Gestänge aus mehreren Einzelstäben besteht, die nebeneinander kreisförmig gebündelt werden und am unteren Ende fest verbunden werden. Oberhalb des festen Bereichs am unteren Ende ist ein beliebiges Auseinanderklappen und Verbiegen der Einzelstäbe möglich.

Im folgenden wird die Erfindung konkret anhand eines bevorzugten Ausführungsbeispiels veranschaulicht, das in den Figuren näher dargestellt ist. Dabei offenbarte Merkmale können auch einzeln oder in anderen als den hier dargestellten Kombinationen erfindungswesentlich sein. Im einzelnen zeigt:
Figur 1 eine Seitenansicht eines erfindungsgemäßen Halters vor dem Verbiegen;
Figur 2 eine Draufsicht auf den Halter aus Figur 1;
Figur 3 eine Figur 1 entsprechende Darstellung des Halters im verbogenen Zustand;
Figur 4 eine Figur 1 entsprechende Darstellung, wobei über ein Haltestabbündel des Halters ein Ring geschoben ist;
Figur 5 eine Figur 2 entsprechende Darstellung mit dem Ring aus Figur 4;
Figur 6 eine Figur 3 entsprechende Darstellung mit dem Ring aus Figur 4;
Figur 7 eine Vorderansicht eines Montagekörpers für den Halter aus den Figuren 1 - 6;
Figur 8 eine Draufsicht auf den Montagekörper aus Figur 7;
Figur 9 eine Figur 7 entsprechende Darstellung des Montagekörpers in Seitenansicht;
Figur 10 eine Seitenansicht eines Standfußes für den Halter aus den Figuren 1 - 6;
Figur 11 eine Draufsicht auf den Standfuß aus Figur 10;
Figur 12 eine alternative Ausführungsform eines Standfußes für den Halter aus den Figuren 1 - 6 in Vorderansicht;
Figur 13 eine Seitenansicht des Standfußes aus Figur 12;
Figur 14 eine Draufsicht auf den Standfuß aus den Figuren 12 und 13;
Figur 15 eine schematische Darstellung des Halters aus den Figuren 4 - 6 mit zurechtgebogenen Haltestäben und an den Haltestäben mittels den Figuren 7 - 9 entsprechenden Haltekörpern befestigten Gegenständen;
Figur 16 eine Darstellung eines Blumenstraußes mit darin integriertem Halter gemäß Figur 15 und durch den Halter in dem Blumenstrauß gehaltenen Gegenständen.

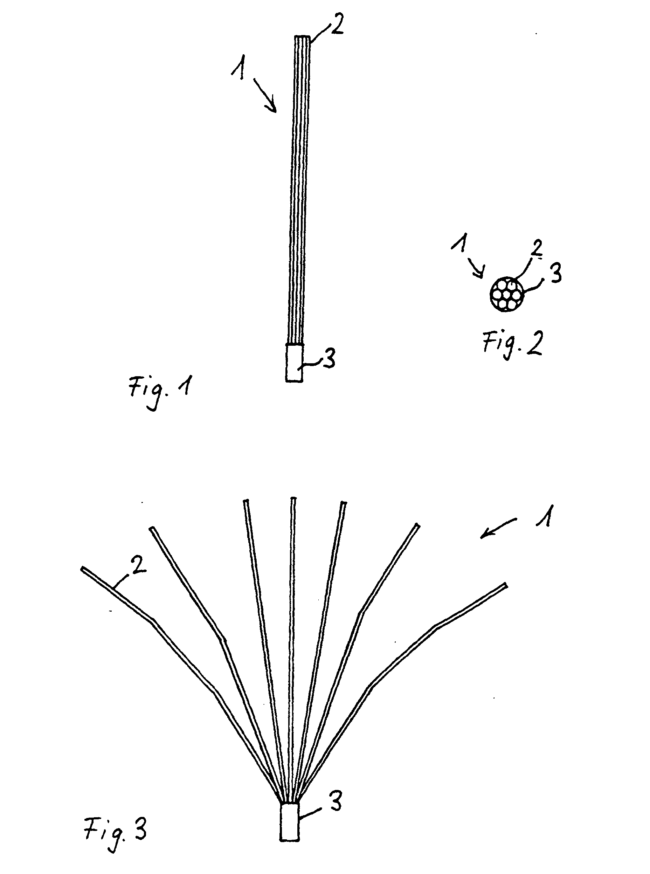

Die Figuren 1 und 2 zeigen die einfachste Grundform eines erfindungsgemäßen Halters mit einem Bündel sich parallel zueinander erstreckende Stäbe 2, die mittels einer an einem Ende übergeschobenen und verpreßten (im einzelnen nicht dargestellt) Hülse 3 fest zusammen gehalten sind. Die Verbindung durch die Hülse 3 verhindert dabei dauerhaft ein Herausziehen oder auch nur Drehen eines Stabes 2 in dem Bündel. Allerdings können die Stäbe 2 aus der in Figur 2 erkennbaren hexagonalen Anordnung von Haltestäben 2 um einen mittleren identischen Rundstab 2 plastisch in nahezu beliebige Form verbogen werden.

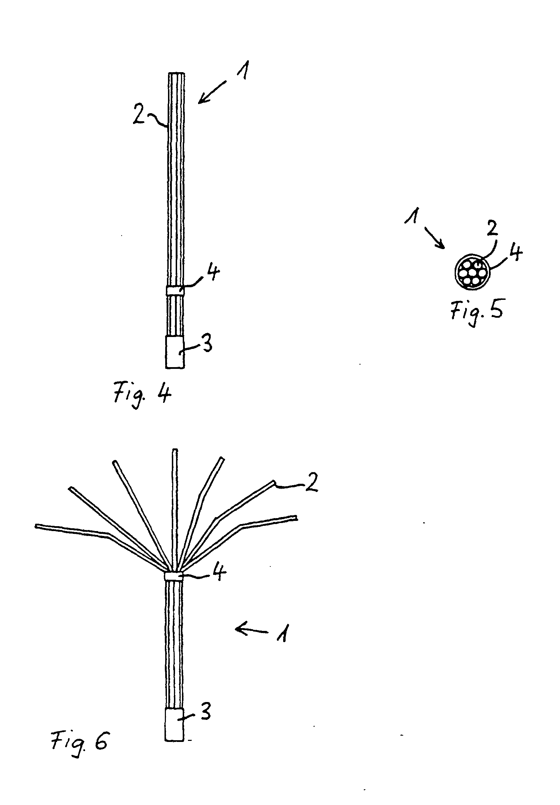

Figur 3 illustriert eine einfache Auffächerung der sieben Stäbe 2. Es sind natürlich auch beliebige andere Formen möglich, wobei durch Einbiegen von Rundungen oder Ablängen auch dafür gesorgt werden kann, daß die Enden der Stäbe 2 auf sehr unterschiedlichem Höhenniveau enden.

Die Figuren 4, 5 und 6 entsprechen den Figuren 1, 2 und 3, wobei jedoch ein über das Bündel Stäbe 2 übergeschobener verschiebbarer Ring 4, wie in Figur 6 veranschaulicht, auf eine bestimmte Höhe geschoben werden kann, um eine Bezugskante zum Herausbiegen der Stäbe 2 aus dem Bündel zu bilden. Dabei ist es natürlich möglich, nach dem Biegen einzelner Stäbe 2 den Ring 4 tiefer zu schieben, um weitere Stäbe 2 mit einer anderen Bezugskante zu verbiegen. Jedenfalls sorgt der Ring 4 auf dem demjenigen Ende, an dem die Stäbe 2 zusammengehalten sind, also der Hülse 3, nächsten solchen Bezugsniveau für ein Zusammenhalten des Bündels der Stäbe 2. Damit kann ein größeres Gewicht an einem Stabende weniger leicht einen der Stäbe 2 weiter als gewünscht herausbiegen.

Der Ring 4 entspricht bis auf seine Länge der Hülse 3, ist jedoch nicht verpreßt und daher auf dem Stabbündel verschiebbar. Die Stäbe 2, die Hülse 3 und der Ring 4 bestehen aus gewöhnlichem blanken Stahl, der zur Verhinderung einer Korrosion leicht geölt sein kann.

Durch die hexagonale Anordnung ist eine runde Form des Bündels der Stäbe 2 möglich, die sich leicht mit einem gewöhlichen Rundrohrstück als Hülse 3 zusammenhalten läßt. Natürlich sind auch von der hexagonalen Anordnung abweichende Bündel möglich, insbesondere auch bei anderen als runden oder sechseckigen Querschnittsformen der Stäbe 2. Der Begriff des "kreisförmigen" Bündels bezeichnet in soweit immer nur ein ungefähr an einen kreisförmigen Querschnitt angenähertes Bündel.

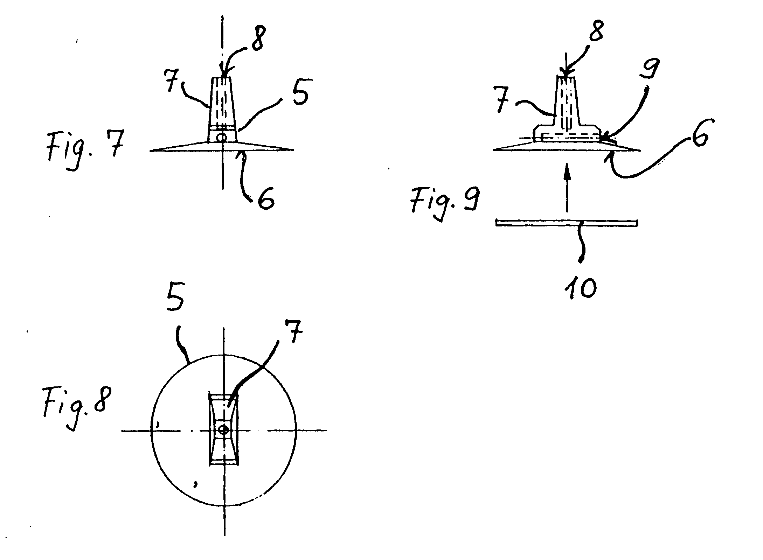

Die Figuren 7, 8 und 9 zeigen einen typischen Montagekörper 5 mit einer großflächigen ebenen Klebefläche 6 und mit einem an dem die Klebefläche 6 aufweisenden flachen Abschnitt ansetzenden Zapfen 7 mit zwei zur Wahl stehenden Einstecköffnungen 8 und 9 für die Enden der in den Figuren 1 - 6 dargestellten Stäbe 2. Wegen des parallel zu der Klebefläche 6 liegenden Einstecklochs 9 weist der Zapfen 7 eine in einer Richtung verbreiterte Basis auf. Der Montagekörper 5 ist ein PE-Spritzgußteil.

Figur 9 zeigt ferner ein doppelseitiges Klebekissen 10, das in der Form der Klebefläche 6 weitgehend entspricht und aus einem leicht nachgiebigen Schaummaterial besteht. Mit dem Klebekissen 10 können verschiedenste Gegenstände schnell und einfach an der Klebefläche 6 befestigt werden. Durch die Nachgiebigkeit des Schaummaterials paßt sich das Klebekissen 10 auch nichtebenen Oberflächen der zu befestigenden Gegenstände über einen bestimmten Flächenbereich an und ermöglicht so eine stabile Klebung. Darüber hinaus ist der hier dargestellt PE-Montagekörper 5 so weich, daß er sich in gewissem Umfang einer Krümmung der entsprechenden Oberfläche des zu befestigenden Gegenstandes anpassen läßt.

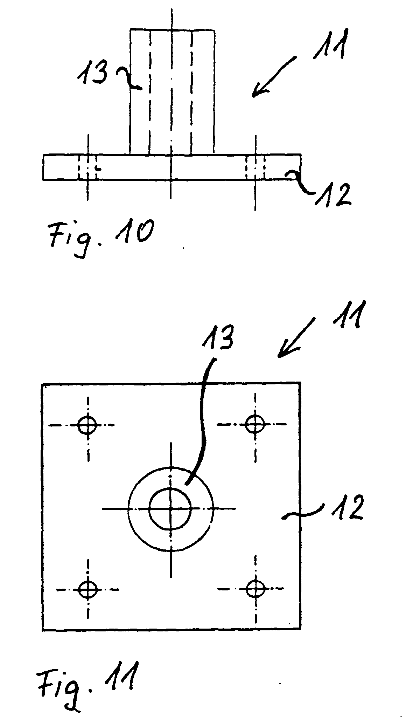

Die Figuren 10 und 11 zeigen eine mögliche Ausführungsform eines Standfußes 11 für den dargestellten Halter. Der Standfuß 11 weist eine Basisplatte 12 mit vier Schraublöchern für eine optionale Schraubmontage an einem Tisch oder dergleichen auf. Ein Rohrstück 13 erhebt sich zentrisch von der Basisplatte 12 und entspricht mit seinem freien Innenquerschnitt der in den Figuren 1 - 6 dargestellten Hülse 3 mit etwas Spiel. Wenn der Fuß 11 auf einen Tisch gestellt oder geschraubt oder anderweitig befestigt ist, kann also der Halter 1 mit der Hülse 3 einfach in das Rohrstück 13 eingeschoben werden und steht danach aufrecht und sicher gehalten. Auch bei dem Standfuß 11 handelt es sich um ein einfaches Metallteil das jedoch sinnvollerweise lackiert ist. Natürlich kann auch ein Kunststoffteil verwendet werden.

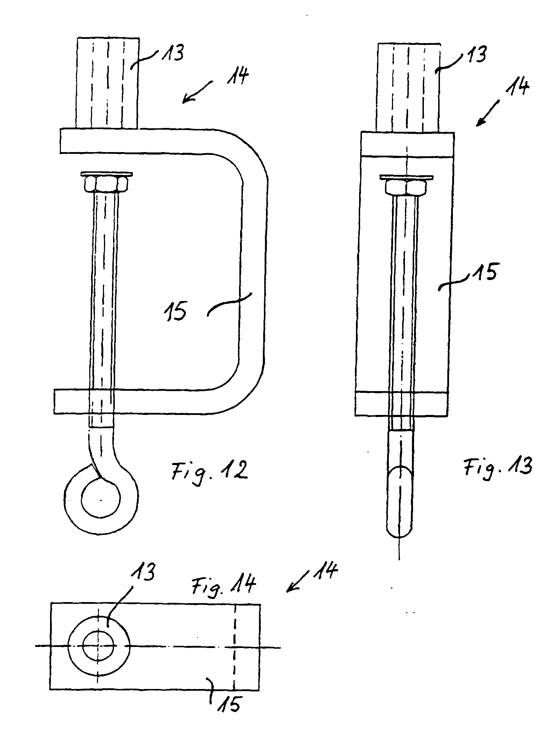

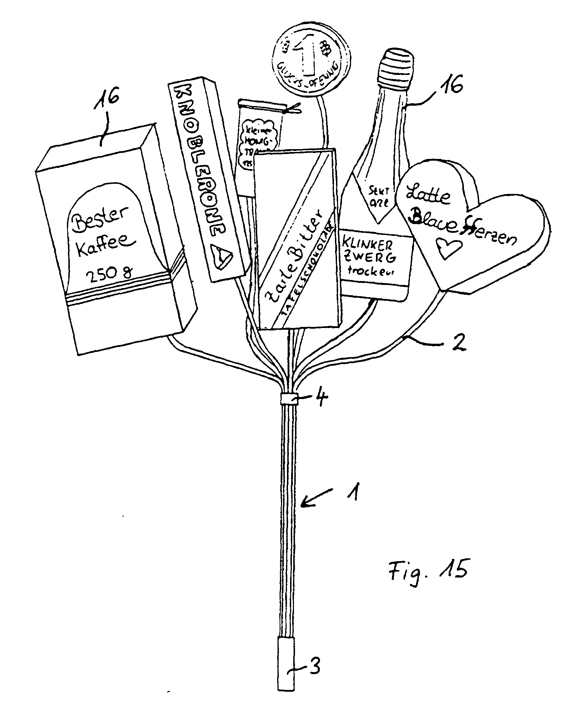

Eine andere mögliche Variante 14 für einen Standfuß zeigen die Figuren 12, 13 und 14. Der hier gezeigte Standfuß 14 weist ein dem Standfuß 11 aus den Figuren 10 und 11 entsprechendes Rohrstück 13 zum Einstecken der Hülse 3 des Halters 1 auf. Das Rohrstück 13 ist jedoch an einer Schraubzwinge 15 angebracht, die beispielsweise an einer Tischkante im Floristengeschäft festgeklemmt werden kann. Dadurch ist eine im Vergleich zu der Schraubbefestigung des Standfußes 11 aus den Figuren 10 und 11 ähnlich sichere, jedoch leichter wieder lösbare und verlegbare Befestigung möglich. Auch bei diesem Standfuß 14 kann es sich um ein vorzugsweise lackiertes Metallteil handeln. Auch die Verwendung von Kunststoffen, zumindest für einen Teil des Standfußes 15, ist natürlich möglich.

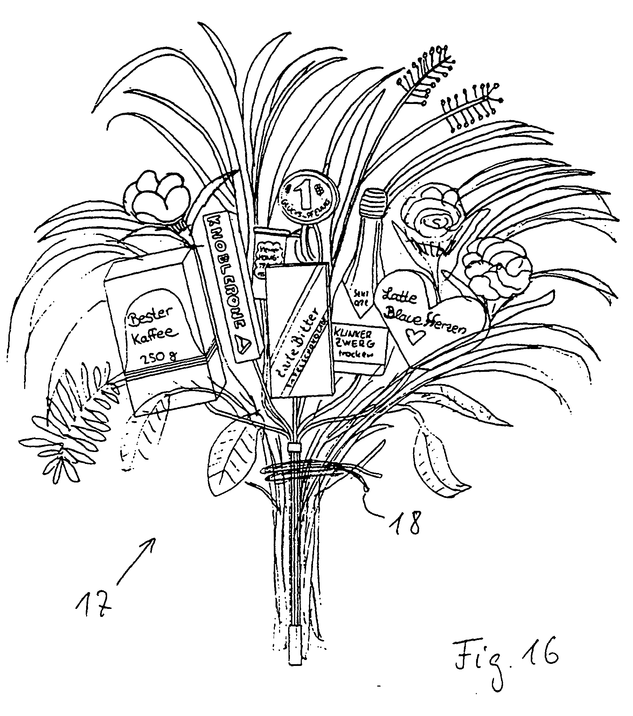

Figur 15 zeigt die Anwendungsweise des erfindungsgemäßen Halters 1 aus den Figuren 4 - 6. Es läßt sich erkennen, daß die einzelnen Haltestäbe 2 des Halters 1 auf einem durch den Ring 4 festgelegten Niveau aus dem Bündel herausgebogen und individuell zurechtgebogen worden sind. An den Enden der einzelnen Stäbe 2 sind - in Figur 15 nicht sichtbar - Montagekörper 5 gemäß der Darstellung in den Figuren 7, 8 und 9 aufgesteckt. An den jeweiligen Klebeflächen 6 sind über Klebekissen 10 verschiedene Gegenstände 16 festgeklebt. Dabei handelt es sich bei diesem Beispiel um kleine Lebensmittelpackungen, nämlich eine kleine Kaffeepackung, Schokoladenpackungen, eine Piccoloflasche Sekt, eine Pralinenschachtel sowie ein kleines Honigglas. Außerdem ist ein symbolischer vergrößerter Glückspfennig als Gegenstand eingezeichnet. Es können natürlich auch verschiedenste andere Gegenstände befestigt sein, beispielsweise auch eigentliche Geschenke mit einem gewissen Wert, die lediglich durch Befestigung innerhalb eines Blumenstraußes in dekorativerer Form überreicht werden sollen. Beispielsweise könnte man mit dem erfindungsgemäßen Halter auch Handwerkzeuge, kleine Elektrogeräte, optische Artikel usw. festhalten.

Je nach der Form des einzelnen zu befestigenden Gegenstandes 16 und nach der gewünschten Position in dem Gesamtarrangement können bei der Befestigung durch Auswahl zwischen den beiden Einstecköffnungen 8 und 9 des Montagekörpers 5 und durch geschicktes Zurechtbiegen der Haltestabenden im Einzelfall günstige geometrische Verhältnisse geschaffen werden. Bei diesem Vorgang ist der Halter 1 in einem der Standfüße 11 und 14 aus den Figuren 10 - 14 gehalten, so daß bequem mit beiden Händen gearbeitet werden kann.

Im Prinzip bildet bereits das in Figur 15 dargestellte Ensemble von an dem erfindungsgemäßen Halter 1 festgehaltenen Gegenständen 16 einen dekorativen Anblick. Insoweit könnte der Halter 1 lediglich mit Gegenständen bestückt bereits Verwendung finden. Bevorzugt ist jedoch eine Integration in einem Blumenstrauß 17, wie in Figur 16 schematisch dargestellt. Dazu ist der Halter 1 mit dem Bereich der Haltestäbe zwischen der Hülse 3 und dem Ring 4, also dem geraden Bereich, im Bündel der Pflanzen und Blumenstiele gefaßt, wobei zur zusätzlichen Stabilisierung eine Umwicklung mit einer Schnur 18 vorgesehen sein kann, wie in Figur 16 angedeutet. Über dem Bündel aus dem geraden Bereich des Halters und den Pflanzen- und Blumenstielen breitet sich dann ein von Blumen und Pflanzen durchsetztes Arrangement der Präsentartikel aus, gewissermaßen ein mit Geschenken bestückter Blumenstrauß 17. In dieser Weise läßt sich der Blumenstrauß 17 präsentieren und überreichen und auch in einer Blumenvase aufstellen. Bei Bedarf kann natürlich ein dem Standfuß 11 aus den Figuren 10 und 11 entsprechender Fuß zur Stabilisierung des Blumenstraußes in der Vase verwendet werden. Jedoch ist dies im allgemeinen nicht bevorzugt, weil das Erscheinungsbild des Straußes 17 durch den Fuß gestört wird. Bei ausreichend enghalsigen Vasen und ausgeglichener Anordnung der Gegenstände 16 bleibt der Strauß auch ohne solche Hilfsmaßnahmen aufrecht stehen.

## Patentansprüche

1. Blumenstrauß (17) mit einem Halter (1) für Gegenstände (16), der eine Mehrzahl verbiegbare Haltestäbe (2) aufweist, die an einem Ende kreisförmig gebündelt an einer gemeinsamen Halterbasis (3) festgehalten sind, und mit zumindest einem an einem der Haltestäbe (2) befestigten und durch den Halter (1) in dem Blumenstrauß (17) gehaltenen Gegenstand (16),
**dadurch gekennzeichnet, dass** der Gegenstand (16) ein nicht-floraler Gegenstand ist und
der Halter (1) in dem Blumenstrauß (17) und in dem Bündel der Blumenstiele darin gefasst ist.

2. Blumenstrauß nach Anspruch 1, bei dem der Gegenstand ein Präsentartikel (16) ist.

3. Blumenstrauß nach einem der vorstehenden Ansprüche, bei dem die Haltestäbe (2) im Wesentlichen aus blankem oder veredeltem Stahldraht bestehen.

4. Blumenstrauß nach einem der vorstehenden Ansprüche, bei dem der Gegenstand (16) an dem Haltestab (2) über einen Montagekörper (5) befestigt ist, in den der Haltestab (2) eingesteckt ist.

5. Blumenstrauß nach Anspruch 4, bei dem der Haltestab (2) in zwei verschiedenen Richtungen (8, 9) in den Montagekörper (5) einsteckbar ist.

6. Blumenstrauß nach Anspruch 4 oder 5, bei dem der Gegenstand (16) an einer Klebefläche (6) des Montagekörpers (5) angeklebt ist.

7. Blumenstrauß nach Anspruch 4, 5 oder 6, bei dem der Montagekörper (5) im Wesentlichen aus PE besteht.

8. Verfahren zum Aufbau eines Blumenstraußes (17) nach einem der vorstehenden Ansprüche mit darin integriertem nicht-floralen Gegenstand (16), bei dem der Gegenstand (16) an einem eine Mehrzahl verbiegbare Haltestäbe (2), die an einem Ende kreisförmig gebündelt an einer gemeinsamen Halterbasis (3) gehalten sind, aufweisenden Halter (1) befestigt wird, der Blumenstrauß (17) um den Halter (1) herum aufgebaut wird und der Halter (1) in dem Blumenstrauß (17) und in dem Bündel der Blumenstiele darin gefasst wird.

9. Verfahren nach Anspruch 8, bei dem vor einem individuellen Zurechtbiegen des Halters (1) über das Bündel ein verschiebbarer Ring (4) geschoben ist, der auf eine gewünschte Höhe geschoben wird, woraufhin Haltestäbe (2) im wesentlichen an der Position des Rings (4) aus dem Bündel weg- und dann zurechtgebogen werden.

10. Verfahren nach Anspruch 8 oder 9, bei dem der Halter (1) beim Aufbau des Blumenstraußes (17) in einem Standfuß (11, 14) gehalten wird.

11. Halter (1) für nicht-florale Gegenstände (16) in einem Blumenstrauß (17) nach einem der Ansprüche 1 - 7 oder zur Verwendung in einem Verfahren nach einem der Ansprüche 8 - 11, mit einem Bündel aus an einem Ende an einer gemeinsamen Halterbasis (3) kreisförmig gebündelt fest miteinander verbundenen verbiegbaren Haltestäben (2) zur Befestigung der Gegenstände (16) in dem Blumenstrauß (17) und zum Fassen der Halterbasis (3) in dem Blumenstrauß (17) und in dem Bündel der Blumenstiele darin.

12. Halter nach Anspruch 11, bei dem die Haltestäbe (2) mit einer über die Mehrzahl Haltestäbe (2) geschobenen Hülse (3) fest verbunden sind.

13. Halter nach Anspruch 11 oder 12, bei dem die Haltestäbe (2) miteinander verpresst sind.

14. Halter nach Anspruch 11, 12 oder 13, bei dem die Haltestäbe (2) ein Bündel im Schnitt runde oder sechseckige Stäbe (2) in einer Anordnung bilden, die im Schnitt eine sechszählige Symmetrie aufweist.

## Claims

1. A bouquet of flowers (17) including a support (1) for items (16) comprising a plurality of bendable supporting rods (2) secured at one end circularly bundled by a common supporting base (3) and including at least one item (16) secured to one of said supporting rods (2) and supported by said support (1) in said bouquet (17),
**characterized in that** said item (16) is a non-floral item and
said support (1) is integrated within said bouquet (17) and clasped in said bundle of floral stems.

2. The bouquet according to claim 1, wherein said item is a gift item (16).

3. The bouquet according to one of the preceding claims, wherein said supporting rods (2) are made substantially of bright or refined steel wire.

4. The bouquet according to one of the preceding claims, wherein said item (16) is secured to said supporting rod (2) via a fastener (5) in which said supporting rod (2) is inserted.

5. The bouquet of flowers according to claim 4, wherein said supporting rod (2) is insertable in two different directions into said fastener (5).

6. The bouquet of flowers according to claim 4 or 5, wherein said item (16) is adhered to an adhesive surface (6) area of said fastener (5).

7. The bouquet of flowers according to claim 4, 5 or 6, wherein said fastener (5) is made substantially of polyethylene.

8. A method of configuring a bouquet of flowers (17) according to one of the preceding claims, including a non-floral item (16) integrated therein, in which said non-floral item (16) is secured to a support (1) comprising a plurality of bendable supporting rods (2) held at one end securely bundled by a common supporting base (3) and said support (1) is clasped in said bouquet of flowers (17) and in the bundle of floral stems therein.

9. A method according to claim 8, in which prior to individually bending said support (1) as desired a shiftable ring (4) is shifted over said bundle to a desired level, resulting in said supporting rods (2) being splayed and subsequently bent to shape from said bundle at the location of said ring (4).

10. The method according to claim 8 or 9, in which said support (1) is held in a stand (11, 14) in configuring said floral arrangement (17).

11. A support (1) for non-floral items (16) in a bouquet of flowers (17) according to one of claims 1 to 7 or to be used in a method according to one of claims 8 to 11, comprising a bundle of bendable supporting rods (2) held at one end circularly bundled and secured by a common supporting base (3) for securing said items (16) in said bouquet of flowers (17) and for clasping said supporting base (3) in said bouquet of flowers (17) and in the bundle of floral stems therein.

12. The support according to claim 11, in which said supporting rods (2) are firmly bundled by a ferrole (3) slipped over said plurality of said supporting rods (2).

13. The support according to claim 11 or 12, in which said supporting rods (2) are crimped together.

14. The support according to claim 11, 12 or 13, in which said supporting rods (2) form a bundle of rods (2) in round or hexagonal cross-section in a hexagonal symmetrical arrangement in cross-section.

## Revendications

1. Bouquet de fleurs (17) avec un support (1) pour des objets (16), qui présente une pluralité de barres de retenue (2) pliables, qui sont groupées sur une extrémité en forme de cercle et sont maintenues sur une base de support (3) commune, et avec au moins un objet (16) fixé sur l'une des barres de retenue (2) et maintenu par le support (1) dans le bouquet de fleurs (17),
**caractérisé en ce que** l'objet (16) est un objet non floral et le support (1) est saisi dans le bouquet de fleurs (17) et dans le groupe des tiges de fleurs.

2. Bouquet de fleurs selon la revendication 1, dans lequel l'objet est un article présent (16).

3. Bouquet de fleurs selon l'une quelconque des revendications précédentes, dans lequel les barres de retenue (2) sont essentiellement à base de fil d'acier nu ou galvanisé.

4. Bouquet de fleurs selon l'une quelconque des revendications précédentes, dans lequel l'objet (16) est fixé sur la barre de retenue (2) au moyen d'un corps de montage (5), dans lequel la barre de retenue (2) est emboîtée.

5. Bouquet de fleurs selon la revendication 4, dans lequel la barre de retenue (2) peut être emboîtée dans deux directions (8, 9) différentes dans le corps de montage (5).

6. Bouquet de fleurs selon la revendication 4 ou 5, dans lequel l'objet (16) est collé sur une surface de collage (6) du corps de montage (5).

7. Bouquet de fleurs selon la revendication 4, 5 ou 6, dans lequel le corps de montage (5) est essentiellement à base de polyéthylène.

8. Procédé pour la constitution d'un bouquet de fleurs (17) selon l'une quelconque des revendications précédentes avec un objet (16) non floral intégré à l'intérieur, dans lequel l'objet (16) est fixé sur un support (1) présentant une pluralité de barres de retenue (2) pliables, qui sont regroupées en forme de cercle sur une extrémité et sont maintenues sur une base de support (3) commune, le bouquet de fleurs (17) est constitué autour du support (1) et le support (1) est saisi dans le bouquet de fleurs (17) et dans le groupe des tiges de fleurs à l'intérieur.

9. Procédé selon la revendication 8, dans lequel une bague (4) coulissante est glissée avant un pliage individuel dans la forme adaptée du support (1) sur le groupe, laquelle bague est glissée à une hauteur souhaitée, après quoi des barres de retenue (2) sont pliées en s'éloignant du groupe essentiellement sur la position de la bague (4) et sont pliées dans la forme adaptée.

10. Procédé selon la revendication 8 ou 9, dans lequel le support (1) est maintenu dans un pied support (11, 14) lors de la constitution du bouquet de fleurs (17).

11. Support (1) pour des objets (16) non floraux dans un bouquet de fleurs (17) selon l'une quelconque des revendications 1 à 7 ou pour l'utilisation dans un procédé selon l'une quelconque des revendications 8 à 11, avec un groupe constitué de barres de retenue (2) pouvant plier, reliées entre elles de façon fixe et regroupées en forme de cercle sur une extrémité sur une base de support (3) commune pour la fixation des objets (16) dans le bouquet de fleurs (17) et pour la saisie de la base du support (3) dans le bouquet de fleurs (17) et dans le groupe des tiges de fleurs.

12. Support selon la revendication 11, avec lequel les barres de retenue (3) sont reliées de façon fixe à un manchon (3) glissé sur la pluralité des barres de retenue (2).

13. Support selon la revendication 11 ou 12, sur lequel les barres de retenue (2) sont comprimées les unes avec les autres.

14. Support selon la revendication 11, 12 ou 13, sur lequel les barres de retenue (2) forment un ensemble de barres (2) rondes ou hexagonales en coupe dans un agencement qui présente en coupe une symétrie de chiffre six.
